(19) Europäisches Patentamt
European Patent Office
Office européen des brevets

(11) **EP 2 726 853 B1**

(12) **FASCICULE DE BREVET EUROPEEN**

(45) Date de publication et mention de la délivrance du brevet:
**21.05.2025 Bulletin 2025/21**

(21) Numéro de dépôt: **12738549.0**

(22) Date de dépôt: **28.06.2012**

(51) Classification Internationale des Brevets (IPC):
**G01N 21/63** *(2006.01)*    **G01N 21/17** *(2006.01)*

(52) Classification Coopérative des Brevets (CPC):
**G01N 21/17; G01N 21/636;** G01N 2021/1736;
G01N 2021/1789; G01N 2021/1791

(86) Numéro de dépôt international:
**PCT/FR2012/051494**

(87) Numéro de publication internationale:
**WO 2013/001242 (03.01.2013 Gazette 2013/01)**

(54) **DISPOSITIF DE GESTION D'IMPULSIONS EN SPECTROSCOPIE POMPE-SONDE**

VORRICHTUNG ZUR VERWALTUNG VON IMPULSEN IN EINER PUMPENSONDENSPEKTROSKOPIE

DEVICE FOR MANAGING PULSES IN PUMP-PROBE SPECTROSCOPY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.06.2011 FR 1155799**

(43) Date de publication de la demande:
**07.05.2014 Bulletin 2014/19**

(73) Titulaires:
• **Ecole Polytechnique / DGAR**
  **91128 Palaiseau Cedex (FR)**
• **CNRS**
  **Centre National de la Recherche Scientifique**
  **75794 Paris Cedex 16 (FR)**

(72) Inventeurs:
• **ANTONUCCI, Laura**
  **F-91400 Orsay (FR)**
• **BONVALET, Adeline**
  **F-91400 Orsay (FR)**
• **JOFFRE, Manuel**
  **F-91120 Palaiseau (FR)**
• **SOLINAS, Xavier**
  **F-91120 Palaiseau (FR)**

(74) Mandataire: **Cabinet Nony**
  **11 rue Saint-Georges**
  **75009 Paris (FR)**

(56) Documents cités:
WO-A1-2007/045773     US-A- 5 258 612
US-A1- 2006 191 884     US-A1- 2008 186 486
US-B1- 6 552 799

• BARTELS A ET AL: "Femtosecond time-resolved optical pump-probe spectroscopy at kilohertz-scan-rates over nanosecond-time-delays without mechanical delay line", APPLIED PHYSICS LETTERS, AIP, AMERICAN INSTITUTE OF PHYSICS, MELVILLE, NY, US, vol. 88, no. 4, 25 January 2006 (2006-01-25), pages 41117 - 041117, XP012082496, ISSN: 0003-6951, DOI: 10.1063/1.2167812

EP 2 726 853 B1

**Description**

La présente invention concerne un dispositif de gestion d'impulsions lumineuses pour mesurer la réaction d'un échantillon exposé à une première impulsion lumineuse dite impulsion « pompe », la mesure étant réalisée par analyse d'un signal lumineux émis par l'échantillon soumis à une seconde impulsion lumineuse, dite impulsion « sonde », décalée par rapport à l'impulsion « pompe » d'un intervalle de temps déterminé.

Le domaine intéressé est celui de la spectroscopie pompe-sonde et, de façon générale, toute application qui nécessite l'utilisation de deux impulsions laser ultracourtes écartées d'un retard temporel connu et variable permettant de réaliser le balayage (en anglais « scan ») de l'intervalle temporel total à investiguer.

Ces dernières années, les études sur la dynamique des systèmes biologiques ont fait l'objet de nombreux travaux. Il a été notamment démontré qu'une telle dynamique peut présenter, dans certains cas, une évolution continue sur plusieurs ordres temporels pouvant aller de la picoseconde jusqu'à la seconde.

La spectroscopie pompe-sonde est une technique qui permet de mesurer la dynamique temporelle d'un système au cours d'une réaction : une impulsion pompe déclenche une réaction, puis une impulsion sonde décalée temporellement mesure les modifications induites. Il est alors nécessaire d'être capable de décaler une impulsion laser par rapport à une autre pendant tout le régime temporel étudié, ce décalage devant être précis à la picoseconde près.

La demande US 2008/186486 divulgue un dispositif de photolyse éclair au laser pour mesurer la réaction d'un échantillon exposé à une première impulsion lumineuse « pompe », la mesure étant réalisée par analyse d'un signal émis par l'échantillon soumis à une seconde impulsion lumineuse « sonde » décalée d'un intervalle de temps régulé par un générateur de délais.

La demande US 5 258 612 A décrit un dispositif pour une expérience pompe-sonde utilisant l'accumulation d'une charge d'un condensateur afin de mesurer l'intervalle de temps entre une première impulsion lumineuse « pompe » et une seconde impulsion lumineuse « sonde ».

Actuellement, il existe trois moyens pour engendrer deux impulsions séparées d'un retard connu et variable.

Le premier moyen consiste à utiliser un seul système laser dont le faisceau est séparé en deux bras. L'un des bras est retardé par rapport à l'autre grâce à une ligne à retard mécanique. Ce système est limité par la longueur de la ligne à retard au régime picoseconde - nanoseconde. De plus, il demande une attention particulière pour conserver une stabilité de pointé suffisante pendant le scan mécanique.

Le deuxième moyen consiste à utiliser deux oscillateurs laser non synchronisés. Le retard est choisi en sélectionnant, pour l'amplification, le couple d'impulsions avec le retard le plus proche du retard voulu. La sélection est généralement réalisée par l'ouverture-fermeture d'une cellule de Pockels autour de l'impulsion voulue. A cause de l'asynchronisme entre les deux oscillateurs laser et de la gigue temporelle qui en résulte, le retard réel entre les deux impulsions ainsi sélectionnées est connu avec une précision qui ne peut pas descendre en-dessous de la période d'oscillation des cavités laser, soit, typiquement, de l'ordre d'une dizaine de nanosecondes. En contrepartie, ce système permet de réaliser des retards arbitrairement longs.

Le troisième moyen consiste à utiliser deux oscillateurs laser synchronisés dont on fait varier le retard en variant leur phase temporelle relative. Associé à une sélection avant amplification comme décrit dans le cadre du deuxième moyen, ce système résout les limites des solutions précédentes en permettant la réalisation de retards longs tout en gardant une précision de l'ordre de la picoseconde. Néanmoins, il demande une mise en œuvre couteuse et complexe qui ne peut pas être réalisée a posteriori sur des oscillateurs laser commerciaux standards, à moins que cette fonctionnalité n'ait été prévue par le fabricant dès la conception du laser. Ce système n'est donc pas accessible à la plupart des utilisateurs potentiels. De façon analogue, il est possible d'utiliser des oscillateurs laser de fréquences différentes en exploitant le principe de la stroboscopie appliquée au domaine femtoseconde, la coïncidence temporelle entre les deux trains d'impulsions étant mesurée par un dispositif optoélectronique. Toutefois, dans les implémentations proposées, cette approche exige, pour bien fonctionner, que les fréquences des deux oscillateurs soient voisines et connues avec une précision très élevée qui demande un contrôle actif des longueurs de cavités laser. Ceci n'est en général pas le cas si cela n'a pas été prévu avant l'acquisition des systèmes.

Ces différentes méthodes ont été décrites dans différentes publications dont les principales sont :
Bredenbeck, Helbing et Hamm., Rev. Sci. Instrum. Vol. 75 p. 4462. Cet article de 2004 décrit une solution de balayage électronique synchrone proposée par l'Institut de Chimie-Physique de Zürich. Les retards longs sont donnés en multiples de la période de répétition des oscillateurs à travers la sélection par une cellule de Pockells de l'impulsion à amplifier. Les retards courts sont engendrés en introduisant une phase connue entre les deux oscillateurs laser. Avec cette méthode, il est possible d'atteindre une précision de 2 ps sur un intervalle s'étendant jusqu'à 50 $\mu$s.

Takagi et Adachi (RSI Vol. 70, p. 2218) ont introduit en 1999 la méthode du balayage optique asynchrone. Le balayage est obtenu en introduisant une différence de taux de répétition connue entre les deux oscillateurs. Si la différence introduite est négligeable par rapport à la fréquence de répétition $f_1$ et $f_2$ des deux oscillateurs, il a été démontré que cela engendre un grandissement de l'axe temporel $f_1/f_2$ et par conséquence un incrément de la résolution spectrale. Dans le travail de Takagi, un grandissement temporel de 760 000 fois a été mesuré.

En 2004 (Keimann, Goble et Holzwarth, « Time domain mid-infrared frequency-comb spectrometer », Opt. Lett. 29, p. 1542 (2004)), cet avantage a été amélioré jusqu'à obtenir un grandissement temporel de 45 500 000 fois, ce qui correspond à 13 cm-1 de résolution spectrale. Ces travaux ont été menés avec des lasers femtoseconde, en mettant l'accent sur la nature discrète des spectres d'impulsions, ce qui a ouvert la voie à la « Spectroscopie par peigne de fréquence », qui exploite le phénomène de battement entre chaque raie de fréquence constituant le spectre des deux impulsions décalées. Les avantages par rapport aux expériences de spectroscopie par transformée de Fourier classiques sont dans la sensibilité de la mesure, la largeur et la résolution spectrales obtenues avec des temps de mesure de quelques dizaines de microsecondes.

Une méthode de synchronisation optoélectronique a également été proposée dans la demande de brevet WO/2007/045773 mais la résolution temporelle obtenue n'est intéressante que lorsque les fréquences des deux oscillateurs sont voisines.

Il serait donc avantageux d'obtenir un dispositif de gestion des impulsions laser permettant d'obtenir un retard entre deux impulsions pouvant varier de la picoseconde à la seconde avec une précision de la picoseconde et cela en utilisant des lasers femtosecondes standards.

Pour résoudre un ou plusieurs des inconvénients cités précédemment, les dispositifs selon les revendications 1, 2 et 3 sont l'objet de la présente invention.

Ces dispositifs permettent ainsi, avantageusement, de se baser sur un fonctionnement libre des deux oscillateurs, fonctionnement ne nécessitant aucun système de contrôle et de rétroaction des cavités optiques. En outre, la précision temporelle n'est pas directement proportionnelle à la différence de fréquences entre les deux oscillateurs et peut ainsi être aisément inférieure à la picoseconde pour les fréquences typiques utilisées dans les lasers standards. Ainsi, la plupart du temps, il est simple d'implémenter le dispositif sur une expérience utilisant deux chaines laser amplifiées préexistantes, juste en envoyant une petite fraction des faisceaux d'oscillateur sur le dispositif.

Des caractéristiques ou des modes de réalisation particuliers, utilisables seuls ou en combinaison, sont :

• Le dispositif comprend en outre deux sélecteurs d'impulsion positionnés respectivement sur chacun des deux faisceaux, chaque sélecteur étant adapté pour transmettre vers un échantillon une impulsion particulière du faisceau sur lequel il est positionné, l'impulsion transmise étant sélectionnée par le calculateur de sorte que l'intervalle de temps entre l'impulsion sélectionnée du premier faisceau et l'impulsion sélectionnée du second faisceau est une valeur prédéterminée ;

• les sélecteurs d'impulsion sont des amplificateurs de lumière ;

• le calculateur est adapté pour sélectionner une série de couples d'impulsions, chaque couple étant composé d'une impulsion du premier faisceau et d'une impulsion du second faisceau, de telle sorte que l'ensemble des intervalles temporels de la série de couples d'impulsions permette un échantillonnage d'un intervalle de mesure prédéterminé.

L'invention sera mieux comprise à la lecture de la description qui suit, faite uniquement à titre d'exemple, et en référence aux figures en annexe dans lesquelles :

- la figure 1 est une vue schématique d'un système de spectroscopie pompe-sonde comportant un dispositif selon un premier mode de réalisation de l'invention ;
- la figure 2 est un chronogramme des impulsions de deux lasers ayant des fréquences de répétition différentes selon le principe du balayage asynchrone et montrant les coïncidences ;
- la figure 3 est une vue schématique d'un montage électronique d'une carte d'acquisition du dispositif de la figure 1 ;
- la figure 4A est un chronogramme de l'électronique de la figure 3 montrant un signal de coïncidence dans une phase ou les deux lasers ne sont pas en coïncidence ;
- la figure 4B est un chronogramme de l'électronique de la figure 3 montrant un signal de coïncidence dans une phase ou les deux lasers sont en coïncidence ;
- la figure 5 est un ordinogramme de fonctionnement du dispositif de la figure 1 ; et
- la figure 6 est une vue schématique d'un système de spectroscopie pompe-sonde comportant un dispositif selon un second mode de réalisation de l'invention.

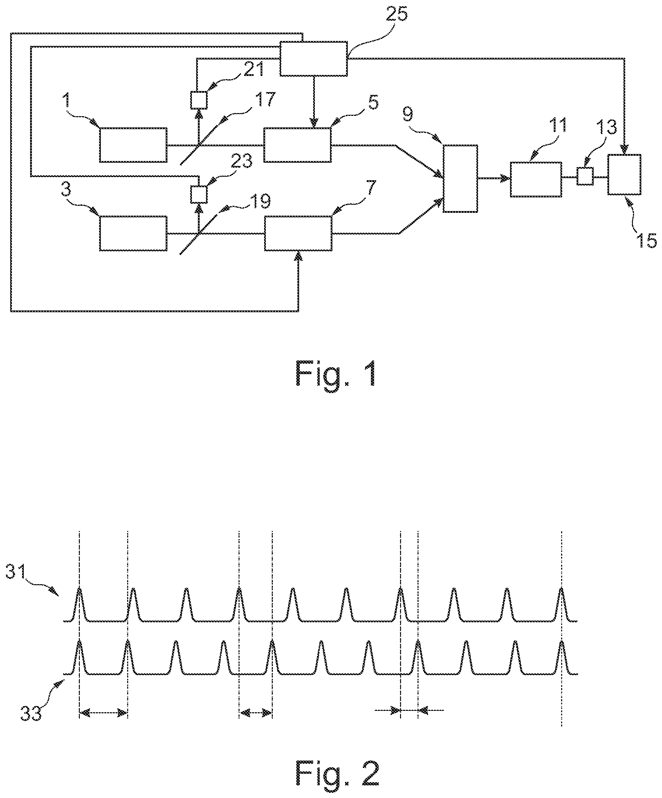

En référence à la figure 1, un dispositif fonctionnant sur le principe de l'échantillonnage hétérodyne comprend, de manière classique, une source laser impulsionnelle « pompe » 1 et une source laser impulsionnelle « sonde » 3 émettant respectivement un faisceau « pompe » et un faisceau « sonde ». Les deux sources laser sont typiquement des lasers femtoseconde émettant donc des impulsions de l'ordre de la centaine de femtosecondes. Les durées d'impulsion « pompe » et « sonde » sont égales ou non. De même les longueurs d'onde centrales des faisceaux « pompe » et « sonde » sont égales ou non en fonction de la mesure à réaliser.

Chaque faisceau passe dans un amplificateur optique 5, 7 avant de se combiner ensemble par un combineur 9. Par exemple, le combineur 9 comprend un miroir et une lame semi-transparente.

Les faisceaux ainsi combinés sont alors dirigés vers un dispositif expérimental 11 dans lequel est placé un échantillon à mesurer.

La réponse de l'échantillon est reçue par un photo-détecteur 13 puis transmise à un système d'acquisition 15.

Dans le mode de réalisation du dispositif de gestion d'impulsions lumineuses de la figure 1, une lame de prélèvement 17, 19 est installée sur le chemin de chaque faisceau en sortie de chaque source laser 1, 3 de façon à capter sur des photo-détecteurs 21, 23 une trace de chaque impulsion. L'homme du métier comprend que la transparence des lames est choisie de façon à n'acheminer aux photo-détecteurs 21, 23 que la puissance nécessaire à leurs fonctionnements.

Les photo-détecteurs 21, 23 sont connectés à un calculateur 25.

Le calculateur 25 comprend une interface de pilotage des amplificateurs optiques 5, 7 et est connecté au système d'acquisition 15.

Le fonctionnement du dispositif est le suivant.

De façon générale, deux oscillateurs conçus en fonctionnement libre, produisent deux peignes d'impulsions 31, 33 de fréquences différentes et hautement stables. Le retard relatif, ou phase temporelle relative, entre les deux peignes défile progressivement entre le moment où se produit une coïncidence et la coïncidence suivante suivant le principe du balayage asynchrone, figure 2.

$\Omega_1$ et $\Omega_2$ étant les fréquences respectives des lasers, il est possible de définir une phase temporelle pour chacun des lasers : $\Phi_1 = \Omega_1 (t-\tau_1)$ et $\Phi_2 = \Omega_2 (t-\tau_2)$ ($\tau_1$ et $\tau_2$ définissant le décalage temporel des deux trains d'impulsions et t étant la coordonnée temporelle). Ces lois étant connues, il est ensuite possible de prévoir avec précision la phase relative $\Delta\Phi = \Phi_2 - \Phi_1$, et donc le retard entre toutes les impulsions produites par les deux oscillateurs.

Pour mesurer les lois de phase des deux oscillateurs, le calculateur détecte les impulsions en coïncidence tout en comptant avec précision le nombre d'impulsions produites par chacun des deux lasers entre les coïncidences. Cette loi d'évolution de l'intervalle de temps entre deux impulsions est donc déterminée par interpolation ou extrapolation. Cela permet de déterminer en particulier $\Omega_2/\Omega_1$ avec une très grande précision.

En effet, soit $\Delta t$ l'intervalle de temps pendant lequel on peut supposer que les oscillateurs restent parfaitement stables, c'est-à-dire qu'il n'y a pas de phénomène de gigue mesurable. Avec les oscillateurs actuels, $\Delta t$ est typiquement de l'ordre de 1ms. T est la période du train d'impulsion et est égal à environ 10 ns pour des oscillateurs à 100 MHz et $\delta\tau$ la précision temporelle de la mesure de coïncidence.

Le nombre d'impulsions produites pendant la période $\Delta t$ vaut $N = \Delta t/T$, ce qui correspond donc à un nombre de coïncidences de l'ordre de $n = N \delta\tau/T$. Compte tenu de la stabilité des oscillateurs, la précision sur la mesure des paramètres $\tau_1$ et $\tau_2$ est donc de l'ordre de

$\delta\tau / \sqrt{n}$. La précision ultime du dispositif est donc liée à la méthode employée pour détecter les coïncidences.

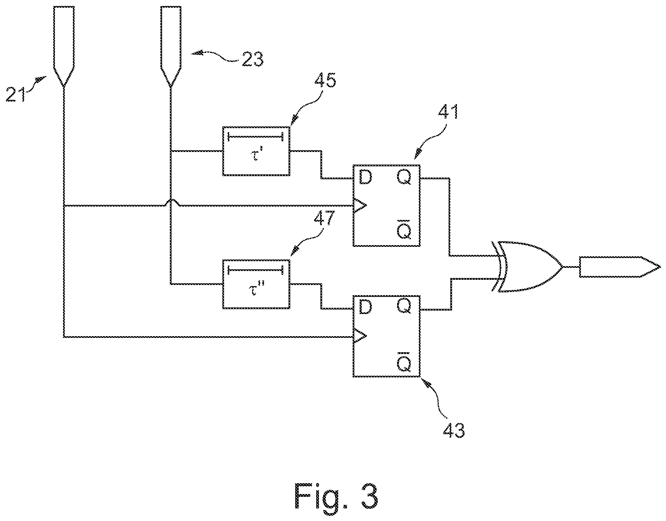

Dans le mode de réalisation de la figure 3, la détection des coïncidences est totalement électronique.

Les photo-détecteurs 21, 23 sont des photodiodes rapides dont le signal électrique est envoyé à une carte électronique du calculateur 25.

Les signaux électriques sont envoyés sur deux bascules D 41, 43. L'un des signaux est utilisé comme horloge commune, l'autre signal est distribué successivement sur l'entrée de la première bascule puis de la seconde bascule avec un léger retard, $\tau'$ pour une première ligne à retard 45 et $\tau''$ pour une seconde ligne à retard 47. A chaque nouvelle impulsion d'horloge, une coïncidence est signifiée par une différence d'état entre les sorties des bascules.

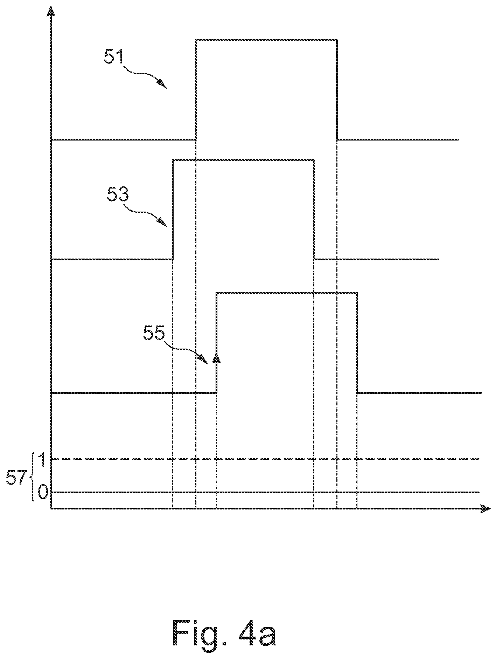

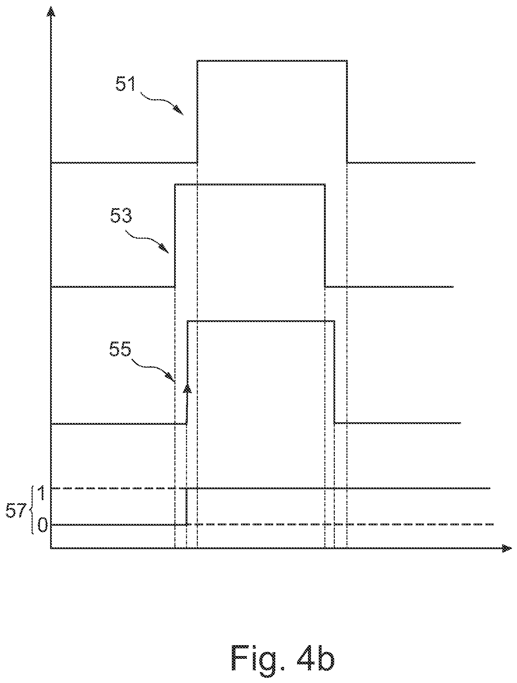

Les figures 4A et 4B montrent le chronogramme des signaux 51, 53 en sortie des lignes à retard 45, 47 et du signal 55 en sortie du photodétecteur et servant d'horloge aux deux bascules D 41, 43. Le signal 57 montre le signal en sortie du OU exclusif de combinaison des deux sorties des bascules D. La figure 4A montre les signaux quand les deux lasers ne sont pas en coïncidence, le signal 57 reste donc à 0 et la figure 4B montre les signaux lors d'une coïncidence, le signal 57 basculant alors de 0 vers 1.

Les inventeurs ont réalisés un prototype selon ce schéma qui permet une précision de l'ordre de $\delta\tau \approx 30$ *ps.* Deux fibres optiques couplées à deux photodiodes Si PIN ont été connectées par paires différentielles au détecteur de coïncidences et au calculateur implanté dans un FPGA de la famille Spartan du fabricant Xilinx. Avec les valeurs numériques ci-dessus, cela donne un taux de 300 coïncidences par milliseconde. Des fréquences de laser suffisamment stables par rapport à ce taux permettent de moyenner ces coïncidences pour obtenir une précision finale légèrement inférieure à 2 ps. Cette valeur peut encore être améliorée en utilisant un circuit spécialisé (ASIC) ou en augmentant le taux de coïncidence en démultipliant le nombre de voies électroniques avec des retards différents et connus.

On notera en variante qu'il est également possible d'utiliser des dispositifs connus de type convertisseur temps numérique (en anglais « time to digital converter ».

Ceci permet d'exploiter des couples d'impulsions même lorsqu'il n'y a pas coïncidence et donc d'augmenter le nombre n d'acquisitions contribuant à la mesure et ainsi d'améliorer la précision de cette dernière.

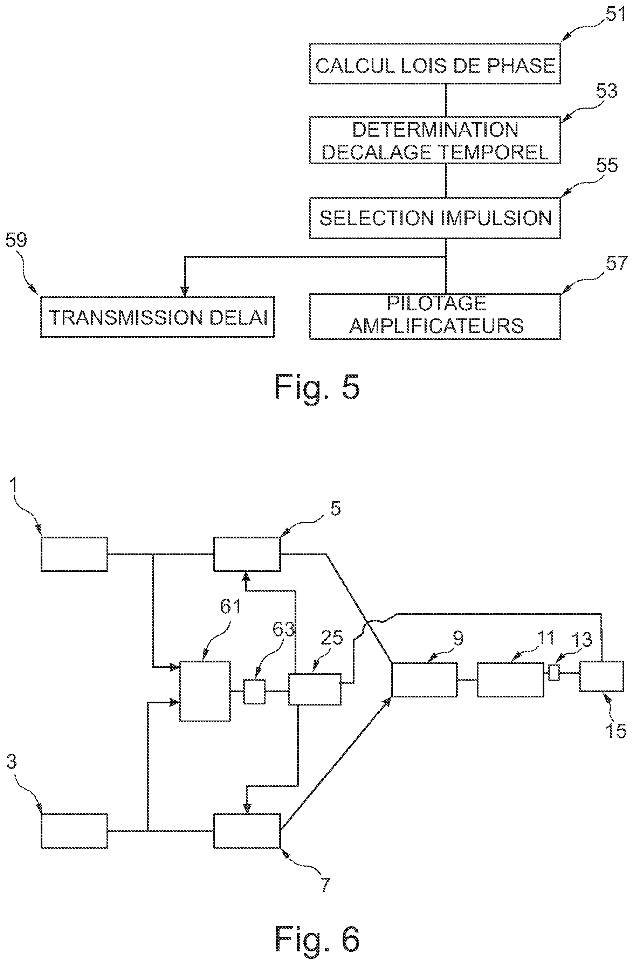

Ainsi, figure 5, en ayant réalisé, étape 51, une mesure précise des lois de phase des deux oscillateurs, le calculateur est alors capable de déterminer, étape 53, la valeur du décalage temporel entre une impulsion quelconque du signal de « pompe » et une impulsion ultérieure quelconque du signal de « sonde ». Et donc, pour une valeur de décalage déterminée, il est capable de sélectionner, étape 55, une paire d'impulsions « pompe » - « sonde » ayant cette valeur de décalage temporel.

Le calculateur 25 pilote, étape 57, alors les amplificateurs 5, 7 pour ne laisser passer, et n'amplifier, que les impulsions correspondantes. En parallèle, il informe, étape 59, le système d'acquisition 15 du délai entre l'impulsion « pompe » et l'impulsion « sonde ».

Comme indiqué dans le préambule, en spectroscopie « pompe »-« sonde », on cherche à mesurer la réaction d'un échantillon sur une gamme de temps variée séparant l'impulsion de « pompe » de l'impulsion de « sonde » de façon à étudier la dynamique de l'échantillon.

Grâce au dispositif décrit, il suffit de paramétrer préalablement la gamme de délais à étudier, par exemple de 1ns à 1ms, et le nombre d'échantillons, par exemple avec un pas de 1 ps et le calculateur est alors capable de sélectionner les séries d'impulsions couvrant la gamme demandée. On notera que l'ordre des mesures peut être quelconque et ne dépende que de l'enchainement des impulsions de façon à minimiser le temps de mesure. Aussi, le calculateur 25 est relié au système d'acquisition 15 de façon à fournir à ce dernier l'information du délai entre impulsions correspondant à la mesure en cours. Un simple traitement de tri sur la durée des délais permet alors d'ordonner les mesures. Une variante intéressante consiste à ne pas utiliser les sélecteurs 5 et 7 ce qui permet d'exploiter tous les couples d'impulsions produits par les deux oscillateurs 1 et 3, les retard étant déterminés a posteriori par le calculateur. Dans ce cas, la dynamique temporelle est limitée à la période des oscillateurs typiquement de l'ordre de 10ns.

Dans un second mode de réalisation, figure 6, les photo-détecteurs 21, 23 et la carte d'acquisition électronique sont remplacés par un dispositif optique.

Celui-ci comprend un interféromètre 61, éventuellement fibré, sur lequel sont alignés les deux faisceaux laser. Les coïncidences correspondant à la superposition temporelle de deux impulsions sont détectées par les interférences linéaires optiques générées. Le signal d'interférence est détecté avec une photodiode 63 et envoyé à une carte d'acquisition du calculateur 25 qui le compare à une valeur de seuil. En variante, il est possible d'utiliser une photodiode sur chacune des deux sorties de l'interféromètre pour procéder à une détection différentielle.

Une détection optique des coïncidences telle que décrite permet d'avoir une précision $\delta\tau$ de l'ordre de la durée des impulsions, soit typiquement 100fs. Avec les valeurs numériques ci-dessus, cela donne un taux de coïncidence $n/\Delta t$ de l'ordre d'une coïncidence par milliseconde. Il est possible d'augmenter le taux de coïncidence au détriment de la précision temporelle en plaçant un filtre réduisant la bande spectrale avant le photodétecteur. Un tel filtre est également nécessaire lorsque les spectres des deux oscillateurs ne sont pas identiques. Enfin, dans le cas où le recouvrement spectral entre les deux oscillateurs est nul, les coïncidences peuvent être détectées à l'aide d'un processus d'optique non-linéaire (absorption à deux photons, somme de fréquences, etc.).

L'invention a été illustrée et décrite en détail dans les dessins et la description précédente. Celle-ci doit être considérée comme illustrative et donnée à titre d'exemple et non comme limitant l'invention a cette seule description.

Dans les revendications, le mot « comprenant » n'exclue pas d'autres éléments et l'article indéfini « un/une » n'exclue pas une pluralité.

## Revendications

1. Dispositif de gestion d'impulsions lumineuses pour mesurer la réaction d'un échantillon exposé à une première impulsion lumineuse dite impulsion « pompe », la mesure étant réalisée par analyse d'un signal émis par l'échantillon soumis à une seconde impulsion lumineuse, dite impulsion « sonde », décalée par rapport à l'impulsion « pompe » d'un intervalle de temps déterminé, comprenant :

   • deux sources laser impulsionnelles (1, 3) ultracourtes ;
   • deux détecteurs optiques (21, 23) adaptés pour détecter les impulsions de deux faisceaux lumineux émis respectivement par les deux sources laser impulsionnelles (1, 3) ultracourtes, le premier faisceau étant dit faisceau « pompe » et le second faisceau étant dit faisceau « sonde », chaque source émettant des impulsions avec des fréquences de répétition respective différentes et arbitraires en direction dudit échantillon ; les détecteurs étant connectés à
   • un calculateur (25) adapté pour déterminer l'intervalle de temps entre deux impulsions provenant respectivement du premier et du second faisceau et constituant les impulsions « pompe » et « sonde » pour la mesure de la réaction de l'échantillon ; et
   • un système d'acquisition (15) pour analyser la mesure de la réaction de l'échantillon ayant comme paramètre d'entrée l'intervalle de temps déterminé par le calculateur (25) pour la mesure mettant en jeu les deux impulsions ;
   • ledit calculateur (25) comprenant un connecteur au système d'acquisition (15),

   **caractérisé en ce que** les fréquences de répétition des sources sont stables sur une période déterminée ($\Delta t$) et **en ce que** le calculateur (25) utilise un algorithme exploitant la stabilité des fréquences de répétition pour déterminer ledit intervalle de temps à partir de la mesure des lois de phase des sources, le calculateur (25) étant adapté pour détecter les co-

īncidences temporelles entre une impulsion du premier faisceau et une impulsion du second faisceau et pour compter le nombre d'impulsions produites par chaque faisceau entre deux coïncidences afin de déterminer la loi d'évolution de l'intervalle de temps entre deux impulsions par interpolation ou extrapolation.

2. Dispositif de gestion d'impulsions lumineuses pour mesurer la réaction d'un échantillon exposé à une première impulsion lumineuse dite impulsion « pompe », la mesure étant réalisée par analyse d'un signal émis par l'échantillon soumis à une seconde impulsion lumineuse, dite impulsion « sonde », décalée par rapport à l'impulsion « pompe » d'un intervalle de temps déterminé, comprenant :

  • deux sources laser impulsionnelles (1, 3) ultracourtes ;
  • deux détecteurs optiques (21, 23) adaptés pour détecter les impulsions de deux faisceaux lumineux émis respectivement par les deux sources laser impulsionnelles (1, 3) ultracourtes, le premier faisceau étant dit faisceau « pompe » et le second faisceau étant dit faisceau « sonde », chaque source émettant des impulsions avec des fréquences de répétition respective différentes et arbitraires en direction dudit échantillon ; les détecteurs étant connectés à
  • un calculateur (25) adapté pour déterminer l'intervalle de temps entre deux impulsions provenant respectivement du premier et du second faisceau et constituant les impulsions « pompe » et « sonde » pour la mesure de la réaction de l'échantillon ; et
  • un système d'acquisition (15) pour analyser la mesure de la réaction de l'échantillon ayant comme paramètre d'entrée l'intervalle de temps déterminé par le calculateur (25) pour la mesure mettant en jeu les deux impulsions ;
  • ledit calculateur (25) comprenant un connecteur au système d'acquisition (15),

  caractérisé en ce que les fréquences de répétition des sources sont stables sur une période déterminée (∆t) et en ce que le calculateur (25) utilise un algorithme exploitant la stabilité des fréquences de répétition pour déterminer ledit intervalle de temps à partir de la mesure des lois de phase des sources, les détecteurs optiques (21, 23) étant combinés sous forme d'un interféromètre (61) dont le signal d'interférence est détecté par au moins une photodiode (63) de sorte que la superposition temporelle de deux impulsions déclenche un signal de coïncidence pour le calculateur (25).

3. Dispositif de gestion d'impulsions lumineuses pour mesurer la réaction d'un échantillon exposé à une première impulsion lumineuse dite impulsion « pompe », la mesure étant réalisée par analyse d'un signal émis par l'échantillon soumis à une seconde impulsion lumineuse, dite impulsion « sonde », décalée par rapport à l'impulsion « pompe » d'un intervalle de temps déterminé, comprenant :

  • deux sources laser impulsionnelles (1, 3) ultracourtes ;
  • deux détecteurs optiques (21, 23) adaptés pour détecter les impulsions de deux faisceaux lumineux émis respectivement par les deux sources laser impulsionnelles (1, 3) ultracourtes, le premier faisceau étant dit faisceau « pompe » et le second faisceau étant dit faisceau « sonde », chaque source émettant des impulsions avec des fréquences de répétition respective différentes et arbitraires en direction dudit échantillon, les détecteurs optiques comportant chacun une photodiode adaptée pour transformer chaque impulsion en un signal électrique servant de signal d'entrée à un circuit électronique « convertisseur temps numérique » (time to digital converter, TDC); les détecteurs étant connectés à
  • un calculateur (25) adapté pour déterminer l'intervalle de temps entre deux impulsions provenant respectivement du premier et du second faisceau et constituant les impulsions « pompe » et « sonde » pour la mesure de la réaction de l'échantillon ; et
  • un système d'acquisition (15) pour analyser la mesure de la réaction de l'échantillon ayant comme paramètre d'entrée l'intervalle de temps déterminé par le calculateur (25) pour la mesure mettant en jeu les deux impulsions ;
  • ledit calculateur (25) comprenant un connecteur au système d'acquisition (15),

  caractérisé en ce que les fréquences de répétition des sources sont stables sur une période déterminée (∆t) et en ce que le calculateur (25) utilise un algorithme exploitant la stabilité des fréquences de répétition pour déterminer ledit intervalle de temps à partir de la mesure des lois de phase des sources.

4. Dispositif selon la revendication 1, 2 ou 3, caractérisé en ce qu'il comprend en outre deux sélecteurs d'impulsion (5, 7) positionnés respectivement sur chacun des deux faisceaux, chaque sélecteur étant adapté pour transmettre vers un échantillon une impulsion particulière du faisceau sur lequel il est positionné, l'impulsion transmise étant sélectionnée par le calculateur (25) de sorte que l'intervalle de temps entre l'impulsion sélectionnée du premier faisceau et l'impulsion sélectionnée du second faisceau ait une valeur prédéterminée.

**5.** Dispositif selon la revendication 4, **caractérisé en ce que** les sélecteurs d'impulsion (5, 7) sont des amplificateurs de lumière.

**6.** Dispositif selon l'une quelconque des revendications précédentes, **caractérisé en ce que** le calculateur (25) est adapté pour sélectionner une série de couples d'impulsions, chaque couple étant composé d'une impulsion du premier faisceau et d'une impulsion du second faisceau, de telle sorte que l'ensemble des intervalles temporels de la série de couples d'impulsions permette un échantillonnage d'un intervalle de mesure prédéterminé.


**Patentansprüche**

**1.** Vorrichtung zur Verwaltung von Lichtpulsen zum Messen der Reaktion einer Probe, die mit einem ersten Lichtpuls, "Pump"-Puls genannt, belichtet wird, wobei die Messung durch Analyse eines Signals ausgeführt wird, das von der Probe emittiert wird, die einem zweiten Lichtpuls, "Sonden"-Puls genannt, ausgesetzt wird, der in Bezug auf den "Pump"-Puls um ein bestimmtes Zeitintervall versetzt ist, umfassend:

    • zwei Ultrakurzpulslaserquellen (1,3);
    • zwei optische Detektoren (21, 23), die dazu angepasst sind, die Pulse von zwei Lichtstrahlen zu detektieren, die jeweils von den beiden Ultrakurzpulslaserquellen (1, 3) emittiert werden, wobei der erste Strahl "Pump"-Strahl genannt wird und wobei der zweite Strahl "Sonden"-Strahl genannt wird, wobei jede Quelle Pulse mit jeweiligen verschiedenen und zufälligen Wiederholfrequenzen in Richtung der Probe emittiert; wobei die Detektoren verbunden sind mit
    • einem Rechner (25), der dazu angepasst ist, das Zeitintervall zwischen zwei Pulsen, die jeweils aus dem ersten und dem zweiten Strahl stammen und den "Pump"-Puls und den "Sonden"-Puls bilden, zum Messen der Reaktion der Probe zu bestimmen; und
    • einem Erfassungssystem (15) zum Analysieren der Messung der Reaktion der Probe, das als Eingangsparameter das von dem Rechner (25) bei der Messung unter Einsatz der beiden Pulse bestimmte Zeitintervall hat;
    • wobei der Rechner (25) einen Steckverbinder zum Erfassungssystem (15) umfasst,

**dadurch gekennzeichnet, dass** die Wiederholfrequenzen der Quellen über eine bestimmte Periode (Δt) stabil sind und dass der Rechner (25) einen Algorithmus verwendet, der die Stabilität der Wiederholfrequenzen nutzt, um das Zeitintervall ausgehend von der Messung der Phasengesetze der Quellen zu bestimmen, wobei der Rechner (25) dazu angepasst ist, die zeitlichen Koinzidenzen zwischen einem Puls des ersten Strahls und einem Puls des zweiten Strahls zu detektieren und die Anzahl der von jedem Strahl zwischen zwei Koinzidenzen erzeugten Pulse zu zählen, um das Änderungsgesetz des Zeitintervalls zwischen zwei Pulsen durch Interpolation oder Extrapolation zu bestimmen.

**2.** Vorrichtung zur Verwaltung von Lichtpulsen zum Messen der Reaktion einer Probe, die mit einem ersten Lichtpuls, "Pump"-Puls genannt, belichtet wird, wobei die Messung durch Analyse eines Signals ausgeführt wird, das von der Probe emittiert wird, die einem zweiten Lichtpuls, "Sonden"-Puls genannt, ausgesetzt wird, der in Bezug auf den "Pump"-Puls um ein bestimmtes Zeitintervall versetzt ist, umfassend:

    • zwei Ultrakurzpulslaserquellen (1, 3);
    • zwei optische Detektoren (21, 23), die dazu angepasst sind, die Pulse von zwei Lichtstrahlen zu detektieren, die jeweils von den beiden Ultrakurzpulslaserquellen (1, 3) emittiert werden, wobei der erste Strahl "Pump"-Strahl genannt wird und wobei der zweite Strahl "Sonden"-Strahl genannt wird, wobei jede Quelle Pulse mit jeweiligen verschiedenen und zufälligen Wiederholfrequenzen in Richtung der Probe emittiert; wobei die Detektoren verbunden sind mit
    • einem Rechner (25), der dazu angepasst ist, das Zeitintervall zwischen zwei Pulsen, die jeweils aus dem ersten und dem zweiten Strahl stammen und den "Pump"-Puls und den "Sonden"-Puls bilden, zum Messen der Reaktion der Probe zu bestimmen; und
    • einem Erfassungssystem (15) zum Analysieren der Messung der Reaktion der Probe, das als Eingangsparameter das von dem Rechner (25) bei der Messung unter Einsatz der beiden Pulse bestimmte Zeitintervall hat;
    • wobei der Rechner (25) einen Steckverbinder zum Erfassungssystem (15) umfasst,

**dadurch gekennzeichnet, dass** die Wiederholfrequenzen der Quellen über eine bestimmte Periode (Δt) stabil sind und dass der Rechner (25) einen Algorithmus verwendet, der die Stabilität der Wiederholfrequenzen nutzt, um das Zeitintervall ausgehend von der Messung der Phasengesetze der Quellen zu bestimmen, wobei die optischen Detektoren (21, 23) in Form eines Interferometers (61) kombiniert werden, dessen Interferenzsignal von mindestens einer Fotodiode (63) detektiert wird, so dass die zeitliche Überlagerung von zwei Pulsen ein Koinzidenzsignal für den Rechner (25) auslöst.

**3.** Vorrichtung zur Verwaltung von Lichtpulsen zum Messen der Reaktion einer Probe, die mit einem ersten Lichtpuls, "Pump"-Puls genannt, belichtet wird, wobei die Messung durch Analyse eines Signals ausgeführt wird, das von der Probe emittiert wird, die einem zweiten Lichtpuls, "Sonden"-Puls genannt, ausgesetzt wird, der in Bezug auf den "Pump"-Puls um ein bestimmtes Zeitintervall versetzt ist, umfassend:

  • zwei Ultrakurzpulslaserquellen (1, 3);
  • zwei optische Detektoren (21, 23), die dazu angepasst sind, die Pulse von zwei Lichtstrahlen zu detektieren, die jeweils von den beiden Ultrakurzpulslaserquellen (1, 3) emittiert werden, wobei der erste Strahl "Pump"-Strahl genannt wird und wobei der zweite Strahl "Sonden"-Strahl genannt wird, wobei jede Quelle Pulse mit jeweiligen verschiedenen und zufälligen Wiederholfrequenzen in Richtung der Probe emittiert, wobei die optischen Detektoren jeweils eine Fotodiode aufweisen, die dazu angepasst ist, jeden Puls in ein elektrisches Signal umzuwandeln, das als Eingangssignal für eine elektronische "Zeit-Digital-Wandler"-Schaltung (time to digital converter, TDC) dient, wobei die Detektoren verbunden sind mit
  • einem Rechner (25), der dazu angepasst ist, das Zeitintervall zwischen zwei Pulsen, die jeweils aus dem ersten und dem zweiten Strahl stammen und den "Pump"-Puls und den "Sonden"-Puls bilden, zum Messen der Reaktion der Probe zu bestimmen; und
  • einem Erfassungssystem (15) zum Analysieren der Messung der Reaktion der Probe, das als Eingangsparameter das von dem Rechner (25) bei der Messung unter Einsatz der beiden Pulse bestimmte Zeitintervall hat;
  • wobei der Rechner (25) einen Steckverbinder zum Erfassungssystem (15) umfasst,

**dadurch gekennzeichnet, dass** die Wiederholfrequenzen der Quellen über eine bestimmte Periode (Δt) stabil sind und dass der Rechner (25) einen Algorithmus verwendet, der die Stabilität der Wiederholfrequenzen nutzt, um das Zeitintervall ausgehend von der Messung der Phasengesetze der Quellen zu bestimmen.

**4.** Vorrichtung nach Anspruch 1, 2 oder 3, **dadurch gekennzeichnet, dass** sie ferner zwei Pulswähler (5, 7) umfasst, die jeweils auf jeden der beiden Strahlen positioniert sind, wobei jeder Wähler dazu angepasst ist, zu einer Probe hin einen besonderen Puls des Strahls, auf den er positioniert ist, zu transmittieren, wobei der transmittierte Puls von dem Rechner (25) so gewählt wird, dass das Zeitintervall zwischen dem gewählten Puls des ersten Strahls und dem gewählten Puls des zweiten Strahls einen vorbestimmten Wert hat.

**5.** Vorrichtung nach Anspruch 4, **dadurch gekennzeichnet, dass** die Pulswähler (5, 7) Lichtverstärker sind.

**6.** Vorrichtung nach einem der vorhergehenden Ansprüche, **dadurch gekennzeichnet, dass** der Rechner (25) dazu angepasst ist, eine Reihe von Pulspaaren zu wählen, wobei jedes Paar aus einem Puls des ersten Strahls und aus einem Puls des zweiten Strahls besteht, so dass die Gesamtheit der Zeitintervalle der Reihe von Pulspaaren eine Abtastung eines vorbestimmten Messintervalls ermöglicht.

**Claims**

**1.** Device for managing light pulses for measuring the reaction of a sample exposed to a first light pulse called the "pump" pulse, the measurement being performed by analysis of a signal emitted by the sample subjected to a second light pulse, called the "probe" pulse, shifted with respect to the "pump" pulse by a determined time interval, comprising:

  • two pulsed laser sources (1, 3) of ultra-short pulses;
  • two optical detectors (21, 23) suited to detecting the pulses of two light beams emitted by the two pulsed laser sources (1, 3) of ultra-short pulses respectively, the first beam being called the "pump" beam and the second beam being called the "probe" beam, each source emitting pulses with respective repetition frequencies that are different and arbitrary in the direction of said sample; the detectors being connected to
  • a computer (25) suited to determining the time interval between two pulses coming from the first and the second beam, respectively, and constituting the "pump" and "probe" pulses for measuring the reaction of the sample; and
  • an acquisition system (15) for analysing the measurement of the reaction of the sample, having as input parameter the time interval determined by the computer (25) for the measurement involving the two pulses;
  • said computer (25) comprising a connector to the acquisition system (15),

**characterized in that** the repetition frequencies of the sources are stable over a determined period (Δt) and **in that** the computer (25) uses an algorithm making use of the stability of the repetition frequencies to determine said time interval on the basis of measurement of the phase laws of the sources, the computer (25) being suited to detecting time coincidences between a pulse of the first beam and a pulse of the second beam, and to counting the number of pulses produced by each beam between two coincidences in order to determine the law of evolution for the time interval between two pulses by interpolation or extrapolation.

2. Device for managing light pulses for measuring the reaction of a sample exposed to a first light pulse called the "pump" pulse, the measurement being performed by analysis of a signal emitted by the sample subjected to a second light pulse, called the "probe" pulse, shifted with respect to the "pump" pulse by a determined time interval, comprising:

• two pulsed laser sources (1, 3) of ultra-short pulses;
• two optical detectors (21, 23) suited to detecting the pulses of two light beams emitted by the two pulsed laser sources (1, 3) of ultra-short pulses respectively, the first beam being called the "pump" beam and the second beam being called the "probe" beam, each source emitting pulses with respective repetition frequencies that are different and arbitrary in the direction of said sample; the detectors being connected to
• a computer (25) suited to determining the time interval between two pulses coming from the first and the second beam, respectively, and constituting the "pump" and "probe" pulses for measuring the reaction of the sample; and
• an acquisition system (15) for analysing the measurement of the reaction of the sample, having as input parameter the time interval determined by the computer (25) for the measurement involving the two pulses;
• said computer (25) comprising a connector to the acquisition system (15),

**characterized in that** the repetition frequencies of the sources are stable over a determined period ($\Delta$t) and **in that** the computer (25) uses an algorithm making use of the stability of the repetition frequencies to determine said time interval on the basis of measurement of the phase laws of the sources, the optical detectors (21, 23) being combined in the form of an interferometer (61), the interference signal of which is detected by at least one photodiode (63) in such a way that the temporal superposition of two pulses triggers a coincidence signal for the computer (25).

3. Device for managing light pulses for measuring the reaction of a sample exposed to a first light pulse called the "pump" pulse, the measurement being performed by analysis of a signal emitted by the sample subjected to a second light pulse, called the "probe" pulse, shifted with respect to the "pump" pulse by a determined time interval, comprising:

• two pulsed laser sources (1, 3) of ultra-short pulses;
• two optical detectors (21, 23) suited to detecting the pulses of two light beams emitted by the two pulsed laser sources (1, 3) of ultra-short pulses respectively, the first beam being called the "pump" beam and the second beam being called the "probe" beam, each source emitting pulses with respective repetition frequencies that are different and arbitrary in the direction of said sample, the optical detectors each having one photodiode suited to transforming each pulse into an electrical signal acting as input signal for an electronic "time-to-digital converter" (TDC) circuit; the detectors being connected to
• a computer (25) suited to determining the time interval between two pulses coming from the first and the second beam, respectively, and constituting the "pump" and "probe" pulses for measuring the reaction of the sample; and
• an acquisition system (15) for analysing the measurement of the reaction of the sample, having as input parameter the time interval determined by the computer (25) for the measurement involving the two pulses;
• said computer (25) comprising a connector to the acquisition system (15),

**characterized in that** the repetition frequencies of the sources are stable over a determined period ($\Delta$t) and **in that** the computer (25) uses an algorithm making use of the stability of the repetition frequencies to determine said time interval on the basis of measurement of the phase laws of the sources.

4. Device according to Claim 1, 2 or 3, **characterized in that** it furthermore comprises two pulse selectors (5, 7) positioned on each of the two beams, respectively, each selector being suited to transmitting toward a sample a particular pulse of the beam on which it is positioned, the transmitted pulse being selected by the computer (25) in such a way that the time interval between the selected pulse of the first beam and the selected pulse of the second beam has a predetermined value.

5. Device according to Claim 4, **characterized in that** the pulse selectors (5, 7) are light amplifiers.

6. Device according to any one of the preceding claims, **characterized in that** the computer (25) is suited to selecting a series of pulse pairs, each pair being composed of a pulse of the first beam and of a pulse of the second beam, in such a way that all of the time intervals for the series of pulse pairs allow sampling of a predetermined measurement interval.

EP 2 726 853 B1

Fig. 1

Fig. 2

Fig. 3

Fig. 4a

Fig. 4b

CALCUL LOIS DE PHASE 51

DETERMINATION DECALAGE TEMPOREL 53

SELECTION IMPULSION 55

59 TRANSMISSION DELAI

57 PILOTAGE AMPLIFICATEURS

Fig. 5

Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008186486 A
- US 5258612 A
- WO 2007045773 A

**Littérature non-brevet citée dans la description**

- **BREDENBECK** ; **HELBING** ; **HAMM**. *Rev. Sci. Instrum.*, vol. 75, 4462
- **TAKAGI** ; **ADACHI**. *RSI*, vol. 70, 2218
- **KEIMANN** ; **GOBLE** ; **HOLZWARTH**. Time domain mid-infrared frequency-comb spectrometer. *Opt. Lett.*, 2004, vol. 29, 1542